# EUROPEAN PATENT APPLICATION

(11) **EP 3 730 379 A1**
(43) Date of publication of application: **28.10.2020**
(21) Application number: 20164543.9
(22) Date of filing: 20.03.2020
(51) Int. Cl.: B61L 15/00, B61L 23/04, B61L 25/02

(54) **SENSOR SYSTEM AND METHOD FOR MONTIORING ENVIRONMENTAL VARIABLES OF A RAIL-BOUND VEHICLE**

(30) Priority: 04.04.2019 SE 1950418
(71) Applicant: ICOMERA AB, 411 03 Göteborg (SE)
(72) Inventor: Bjurström, Joel, 416 57 Göteborg (SE)
(74) Representative: AWA Sweden AB

(57) **Abstract**

A sensor system and a method for measuring environmental parameters associated with a rail-bound vehicle having a plurality of carriages are disclosed. The sensor system comprises a plurality of sensors arranged in a separate carriage of the rail-bound vehicle at a defined distance from a reference point within the rail-bound vehicle. The sensor system further comprises are control unit configured to receive measurement signals, and to time shift the received measurement signals based on the defined distance and a velocity of the rail-bound vehicle in order to determine whether an event measured by the plurality of sensors is present at the same point in time in two or more signals of a modified (time-shifted) set of signals.

## Description

### TECHNICAL FIELD OF THE INVENTION

The present invention relates to a sensor system for rail-bound vehicles and a method thereof. More specifically, the present invention relates to a system and method for fusing sensor data from multiple carriages of the rail-bound vehicle and thereby improve measurement redundancy in a simple and cost effective manner.

### BACKGROUND

The present and growing abundance of inexpensive, highly integrated electronic sensors along with improvements in data processing and refinement has driven a development of increased monitoring of many variables not previously considered interesting, often with tangible positive economic implications.

For example, vibration monitoring and analysis in industrial machinery, using inexpensive electronic accelerometers, enables the concept of Condition Based Maintenance (CBM) whereby the health of an individual mechanical component can be determined to some accuracy. This allows for the detection of approaching mechanical issues before a breakdown occurs. Moreover, it allows for prolongation of maintenance intervals, where components previously had been serviced or replaced unnecessarily early in order to ensure reliability. Accordingly, the advantages are two-fold since unwarranted maintenance as well as unforeseen disturbances are avoided.

Condition monitoring of railway tracks is not only essential in ensuring the safety of railways but also for keeping control of track quality so to increase rail operation revenues. In the railway industry, specialized track geometry vehicles typically measure the condition of railway tracks. However, for reasons of cost and practicality, these measurements are infrequently performed. Further, excluding drainage and substructure, track geometry deteriorates primarily due to the influence of dynamic loads exerted by rail-bound vehicles. However, these dynamic loads cause deterioration of all track elements: rails, wooden sleepers, concrete sleepers, fastenings, substructure, and railway geometry.

To this end, conventional track monitoring systems make use of no-contact opto-electronic technologies or inertial techniques, instead of traditional "contact" track measuring systems which use mechanical devices in contact with rails and are accordingly more prone to wear and eventual deterioration in terms of accuracy. Thus, "contact" systems require regular monitoring, calibration, repair, or replacement. However, conventional systems relying on inertial techniques often experience problems when measuring at low speeds and with rapid accelerations/decelerations, while opto-electronic technologies are oftentimes complex and costly.

Thus, there is a need for a new and improved method and system for monitoring or measuring environmental parameters of rail-bound vehicles in order to for example monitor the condition of a railway track or add redundancy to conventional geolocation systems, and similar. In more detail, there is a need for a method and system which are cost effective and less complex than presently known solutions. Stated differently, there is a need for a method and system for monitoring environmental variables of rail-bound vehicles which is simple, cost-effective, and reliable.

### SUMMARY OF THE INVENTION

It is therefore an object of the present invention to provide a method and a sensor system for rail-bound vehicles, in particular trains, which alleviates all or at least some of the above-discussed drawbacks of presently known systems.

A specific object of the invention is to provide a sensor system and method for rail-bound vehicles which enables for reliable and cost effective monitoring and diagnosing of the condition of a railway track.

These objects are achieved by means of a sensor system and method as defined in the appended claims. The term exemplary is in the following to be interpreted as; serving as an example, instance or illustration.

According to a first aspect of the present invention, there is provided a sensory system for a rail-bound vehicle having a plurality of carriages, the system comprising:
a plurality of sensors, each sensor being arranged in a separate carriage of the rail-bound vehicle at a defined distance from a reference point within the rail-bound vehicle, and each sensor being configured to generate a measurement signal based on detection of an environmental parameter;
a velocity measurement device configured to determine a velocity of the rail-bound vehicle;
a control unit configured to:
   receive the measurement signal from each of the plurality of sensors;
   time-shifting the received measurement signals based on the velocity of the rail-bound vehicle and the defined distance in order to form a modified set of signals, such that a measurement made by each sensor at the same geographical location appears to have occurred simultaneously; and
   determine whether an event measured by the plurality of sensors is present at the same point in time in at least two signals of the modified set of signals, preferably in a majority of signals of the modified set of signals, and most preferably in all signals of the modified set of signals.

Hereby presenting a system capable of increasing redundancy for various applications for rail-bound vehicles in a simple and cost effective manner. For example, the inventive method can be utilized for increasing redundancy and thereby reliability of rail malfunction detection, internal environment settings (e.g. dimming of lighting arrangements), and geographical positioning of the vehicle. Each of these application areas will be further discussed in association with various exemplary embodiments of the present invention. Stated differently, the present invention allows for synthesizing a higher-quality recording of geographically localized phenomena, by using information about the instantaneous velocity of the train to combine the data from several sensors of the same type installed in multiple places throughout the length of the train.

The control unit can be provided by means of appropriate software, hardware or a combination thereof. Moreover, the control unit may be a local controller arranged or provided within the rail-bound vehicle. Alternatively, the control unit may be a central control unit, arranged remotely in reference to the rail-bound vehicle. It may be advantageous to utilize a centralized system with a central control unit for the sake of computational capability. In yet another alternative embodiment, the system may us a combination of a local control unit and a central control unit, where the local control unit is configured to transmit sensor data to the central control unit by means of a router via e.g. an exterior mobile network as known in the art.

Suitable sensors may for example be electrical transducers which convert physical quantities into electrical quantities, such as e.g. accelerometers, optical sensors, acoustic sensors, pressure sensors, etc., depending on the intended application.

In the context of the present invention, the step of time-shifting the received measurement signals is to be understood as that all of the received signals need not necessarily be shifted. For example, it may be sufficient to apply a time-shift to all but one signal if that signal originates from a sensor which acts as the spatial reference point, such that the modified set of signals is formed. However, in other embodiments all of the signals may be time-shifted in order to form the modified set of signals.

The present invention is based on the realization that the inherent multi-carriage arrangement on rail-bound vehicles such as trains or trams can be used to realize a simple, reliable, and cost effective monitoring system suitable for various applications. In reference to a track monitoring application, it was realized that by having a set of sensors, each arranged in a separate carriage, at a known distance from each other, one can utilize the individual measurements by each sensor in order to make a reliable determination of a damaged section of a railway track without the need for expensive sensing arrangements, utilizing specialized vehicles, dispatching personnel, or making multiple measurements by multiple vehicles.

Stated differently, the present inventor realized that one can realize a reliable and cost effective system by having the distance between each sensor known (directly or indirectly), and time-shifting the recorded values from each sensor in proportion to the velocity of the train (as measured by e.g. GPS, wheel tick counter, or any other suitable means) and the aforementioned distance, such that the data appears to have been recorded by sensors located at a single location on the rail-bound vehicle. While in reality, the sensors are spread out along the length of the rail-bound vehicle.

Since the present invention allows relatively inexpensive sensors to be used, and still, by the aggregation of the sensor data, being capable of providing reliable and precise measurement data, it becomes feasible to provide the sensor system on many trains or other vehicles travelling on any particular part of a railway system. Thus, this allows every part of the railway system to be measured and monitored with high frequency to a very low cost. Hereby, problems related to the railway system, such as emerging problems related to wear on the railway tracks, switches and the like, can be detected at an early stage, before any serious malfunction and accidents have occurred. This also allows maintenance and the like to be scheduled more efficiently.

To this end, it is also feasible to compare newly acquired sensor data with previously acquired sensor data from the same vehicle, or from other vehicles having passed the same location, and to determine trends, etc.

Further, each sensor may be arranged in the same or similar position in each carriage, such that the structural surroundings are the same or similar, whereby the need for individual calibration of each sensor is reduced. However, as is readily appreciated by the skilled reader, each sensor may be placed at locations with differing structural surroundings, whereby reliable data can be extracted by appropriate filtering algorithms or calibration schemes.

In accordance with an exemplary embodiment of the present invention, the plurality of sensors comprises a plurality of accelerometers, each accelerometer being arranged in a separate carriage of the rail-bound vehicle at a defined distance from the reference point within the rail-bound vehicle, and each accelerometer being configured to generate a vibration detection signal based on a detection of vibration of an associated carriage;
wherein the control unit is configured to:
receive the vibration detection signal from each of the plurality of accelerometers;
time-shifting the received vibration detection signals based on the velocity of the rail-bound vehicle and the defined distance between the accelerometers and the reference point in order to form a modified set of vibration detection signals, such that a measurement made by each accelerometer at the same geographical location appears to have occurred simultaneously; and
determine whether an event measured by the plurality of accelerometers is present at the same point in time in at least two of the modified set of vibration detection signals, preferably in a majority of the modified set of vibration detection signals, and most preferably in all of the modified set of vibration detection signals.

Accordingly, the inventive sensor system can be utilized for monitoring track quality on a railway, and thereby enable for detection of developing mechanical issues before a breakdown occurs. The present inventor realized that the data generated by conventional accelerometers for representing mechanical issues on a railway may be of lower quality than that recorded by the specialized track geometry vehicles discussed in the background section of the present application, but that the abundance of data resulting from equipping multiple carriages with accelerometers can to some extent compensate for the lower quality. In particular when statistical analysis and correlation is performed on these large data sets. Measuring a vibration is in the present context to be understood as accelerations along a substantially vertical axis.

Further, in another exemplary embodiment of the present invention, the plurality of sensors further comprises a plurality of acoustic sensors, each acoustic sensor being arranged separate carriage of the rail-bound vehicle at a defined distance from the reference point within the rail-bound vehicle, and each acoustic sensor being configured to generate a sound detection signal based on sound measurements in an associated carriage;
wherein the control unit is further configured to:
receive the sound detection signal from each of the plurality of acoustic sensors;
time-shifting the received sound detection signals based on the velocity of the rail-bound vehicle and the defined distance between the acoustic sensors and the reference point in order to form a modified set of sound detection signals, such that a measurement made by each acoustic sensor at the same geographical location appears to have occurred simultaneously; and
determine whether an event measured by the plurality of acoustic sensors is present at the same point in time in at least two of the modified set of sound detection signals, preferably in a majority of the modified set of sound detection signals, and most preferably in all of the modified set of sound detection signals.

Accordingly, by applying the same velocity based time-shift to sound level readings, it is possible to detect noise caused by a geographically fixed object, such as e.g. tree branches or man-made structures, brushing or scraping against the vehicle along the railway track. These readings may for example be used to increase redundancy in the above discussed accelerometer data in order to filter false positives in the accelerometer data (e.g. to detect vibrations caused by other objects than mechanical damages on the railway track).

Further, in yet another exemplary embodiment of the present invention, the plurality of sensors further comprises a plurality of light sensors, each light sensor being arranged separate carriage of the rail-bound vehicle at a defined distance from the reference point within the rail-bound vehicle, and each light sensor being configured to generate a light detection signal based on light measurements in an associated carriage;
wherein the control unit is further configured to:
receive the light detection signal from each of the plurality of light sensors;
time-shifting the received light detection signals based on the velocity of the rail-bound vehicle and the defined distance between the light sensors and the reference point in order to form a modified set of light detection signals, such that a measurement made by each light sensor at the same geographical location appears to have occurred simultaneously; and
determine whether an event measured by the plurality of light sensors is present at the same point in time in at least two of the modified set of light detection signals, preferably in a majority of the modified set of light detection signals, and most preferably in all of the modified set of light detection signals.

By using the time shifted light detection signals it is possible to for example detect the entering or leaving of a tunnel, in a simple and cost effective manner. This information (modified set of light detection signals) may for example be used to control the dimming up and down of lighting in the carriages, or for the augmentation of positioning systems (e.g. geolocation systems such as GPS), as will be further elaborated upon in the following. Alternatively, air pressure sensors may be used for similar purposes.

Thus, in another exemplary embodiment the plurality of sensors further comprises a plurality of air pressure sensors, each air pressure sensor being arranged separate carriage of the rail-bound vehicle at a defined distance from the reference point within the rail-bound vehicle, and each air pressure sensor being configured to generate an air pressure detection signal based on air pressure measurements in an associated carriage;
wherein the control unit is further configured to:
receive the air pressure detection signal from each of the plurality of air pressure sensors;
time-shifting the received air pressure detection signals based on the velocity of the rail-bound vehicle and the defined distance between the air pressure sensors and the reference point in order to form a modified set of air pressure detection signal, such that a measurement made by each air pressure sensor at the same geographical location appears to have occurred simultaneously; and
determine whether an event measured by the plurality of air pressure sensors is present at the same point in time in at least two of the modified set of air pressure detection signals, preferably in a majority of the modified set of air pressure detection signals, and most preferably in all of the modified set of air pressure detection signals.

Moreover, in accordance with another exemplary embodiment, the sensor system further comprises:
a geolocation system arranged in the rail-bound vehicle for determining a geographical position of the rail-bound vehicle; and
wherein the control unit is configured to receive the geographical position from the geolocation system and determine a geographical location of the determined event based on the received geographical position.

The geolocation system may for example be. a GNSS (Global Navigation Satellite System) such as e.g. GPS, GLONASS, GALILEO, etc. However, other geolocation systems are feasible such as use of radio beacons, simultaneous localization and mapping (SLAM), etc.

In reference to the above mentioned augmentation of positioning systems, and in accordance with another exemplary embodiment of the present invention, the control unit is further configured to correlate the modified set of light detection signals and/or the modified set of air pressure detection signals with the determined geographical position in order to add redundancy to measurements performed by the geolocation system.

In other words, one can utilize some embodiments of the inventive sensor system which comprises the light sensors and/or the air pressure sensors and correlate their readings with the positional readings of the geolocation system. For example, by using the light sensors in order to determine when the rail-bound vehicle passes enters or exists a tunnel, this information may be compared to the position as determined by the geolocation system in order to provide a more reliable geographical position determining means.

Moreover, in accordance with yet another exemplary embodiment, the sensor system further comprises a lighting device arranged in each carriage which comprises a light sensor and/or an air pressure sensor, each lighting device being operatively connected to the control unit; and
wherein the control unit is further configured to:
control each lighting device based on the modified set of light detection signals and/or the modified set of air pressure detection signals.

By relying on the modified set of light detection signals and/or the modified set of air pressure signals, the probability that a light detection event and/or said air pressure event has occurred is increased, and thereby the risk of inappropriate light dimming in vehicle carriages, due to false positives or false negatives, is reduced.

Further, in accordance with another aspect of the present invention, there is provided a method for measuring environmental parameters associated with a rail-bound vehicle having a plurality of carriages, said method comprising:
determining a velocity of said rail-bound vehicle;
measuring an environmental parameter independently in a plurality of carriages thereby forming a measurement reading over time, each measurement being performed at a defined distance from a reference point within said rail-bound vehicle;
time-shifting the measurement readings based on said velocity of the rail-bound vehicle and said defined distance, in order to form a modified set of measurement readings, such that a measurement made in each carriage at the same geographical location appears to have occurred simultaneously; and
determining whether an event measured in each separate carriage is present at the same point in time in at least two of said modified set of measurement readings, preferably in a majority of said modified set of measurement readings, and most preferably in all of said modified set of measurement readings.

With this aspect of the invention, similar advantages and preferred features are present as in the previously discussed first aspect of the invention and vice versa.

For example, the environmental parameter may be vibration, sound, light or air pressure. In reference to the vibration measurement, it goes without saying that this refers to detectable vibrations which are larger in magnitude than the normal vibrations caused by the normal vehicle movements, such as for example if the rail-bound vehicle would pass over a damaged section of the railway track.

These and other features of the present invention will in the following be further clarified with reference to the embodiments described hereinafter.

### BRIEF DESCRIPTION OF THE DRAWINGS

For exemplifying purposes, the invention will be described in closer detail in the following with reference to embodiments thereof illustrated in the attached drawings, wherein:
Fig. 1 is a schematic illustration of a rail-bound vehicle having a sensor system in accordance with an embodiment of the present invention;
Fig. 2 is a schematic illustration of a rail-bound vehicle having a sensor system in accordance with an embodiment of the present invention, where the received measurement signals are highlighted;
Fig. 3 is a flow-chart representation of a method for measuring environmental parameters associated with a rail-bound vehicle having a plurality of carriages in accordance with an embodiment of the present invention.

### DETAILED DESCRIPTION

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the detailed embodiments described in the following are related to trains. However, it is to be acknowledged by the skilled reader that the system and method are correspondingly useable on other rail-bound vehicles, such as trams, subways (metro/tube), monorails, etc.

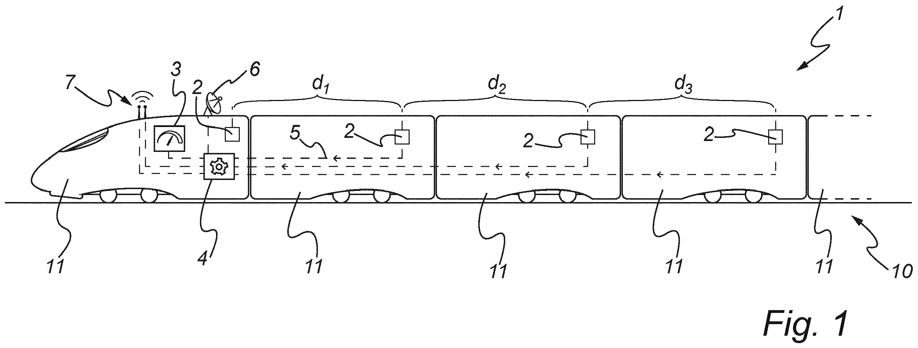

In Fig. 1 a schematic illustration of a rail-bound vehicle 10, such as a train, having a sensor system 1 is provided. The sensor system 1 comprises a plurality of sensors 2. Each sensor 2 is arranged in a separate carriage 11 of the rail-bound vehicle 10 at a defined distance from a reference point. In the illustrated embodiments each sensor 2 is arranged at a defined distance di, d₂, d₃ from each other. Thus, any one of the illustrated sensors 2 can be construed as the reference point. Moreover, each sensor 2 is configured to generate a measurement signal based on detection of an environmental parameter (e.g. acceleration, sound, light, air pressure, etc.). Thus, the sensors 2 may be accelerometers, acoustic sensors, light sensors, and/or air pressure sensors.

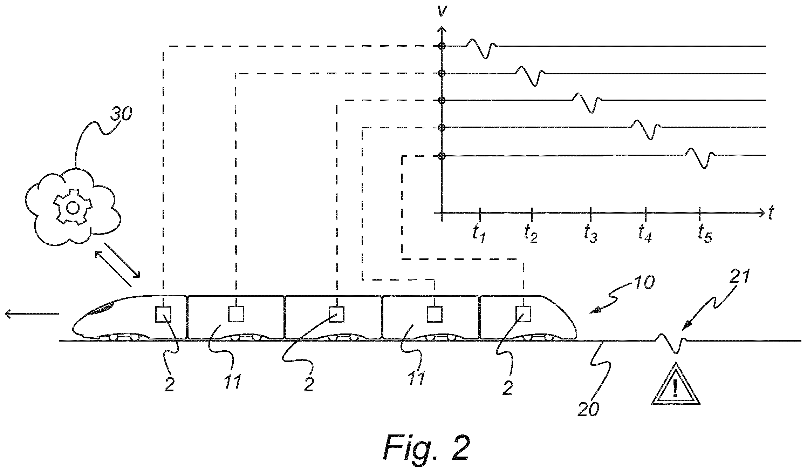

Further, the sensor system 1 has a velocity measurement device 3 (e.g. GPS, wheel tick counter, or any other conventional speedometer) configured to determine a velocity of the rail-bound vehicle 10. The sensor system 1 also has a control unit 4 connected to the velocity measurement device 3, and each sensor 2. The skilled reader readily understands that the various components (control unit, sensors, velocity measurement device, etc.) need not be physically connected to each other, but may be connected by wireless means as known in the art. The rail-bound vehicle may for example have a communication system with one or more data communication routers to which the different components are connected in order to transmit data via an internal local area network (LAN). The control unit 4 is preferably realized as a software controlled processor. However, the controller may alternatively be realized wholly or partly in hardware. Moreover, even though the control unit 4 is illustrated as a local control unit 4 arranged within the rail-bound vehicle, it may however in alternative embodiments be a remote unit arranged external to the rail-bound vehicle 10. It may for example be a central control unit (ref. 30 in Fig. 2) operatively connected to a plurality of such rail-bound vehicles 10, and capable of receiving and processing sensor data from each of these vehicles. In such cases, each rail-bound vehicle 10 may accordingly be provided with suitable communication circuitry 7 to transmit this data to a remote processor/server via e.g. an external mobile network.

The control unit 4 is configured to receive the measurement signal from each of the plurality of sensors 2, and then time shift the received measurement signals based on the velocity of the rail-bound vehicle 10 and the defined distances d₁, d₂, d₃ in order to form a modified set of signals, such that the measurement made by each sensor 2 at the same geographical location appears to have occurred simultaneously. The modified set of vibration signals may for example be a modified set of vibration detection signals if the sensors 2 are accelerometers, or light detection signals if the sensors are light sensors.

The control unit 4 is further configured to determine whether an event measured by the plurality of sensors is present at the same point in time in at least two signals of the modified set of signals. If this condition is true, it can be concluded that the detected event is true, and not a false positive. Preferably, the control unit 4 is configured to determine whether an event measured by the plurality of sensors is present at the same point in time in a majority of signals of the modified set of signals, and more preferably to determine whether an event measured by the plurality of sensors is present at the same point in time in all signals of the modified set of signals.

The sensor system 1 further has a geolocation system 6 (e.g. a GNSS such as GPS, Galileo, GLONASS, Beidou, etc.) for determining the geographical position (longitude, latitude and elevation) of the rail-bound vehicle 10. The control unit 2 is accordingly further configured to receive the geographical position of the rail-bound vehicle 10 from the geolocation system 6, and determine a geographical location of the previously determined event.

The rail-bound vehicle 10 further has a lighting device (not shown) arranged in each carriage 11 which comprises a light sensor 2 and/or an air pressure sensor. Each lighting device is operatively connected to the control unit 4. In other words, the control unit 4 is capable of controlling the operation of each lighting device. More specifically, the control unit 4 is configured to control each lighting device (dim up, dim down, turn on, turn off) based on the modified set of light detection signals and/or the modified set of air pressure detection signals. This is advantageous in order to increase precision of dimming up/down in carriages when the rail-bound vehicle 10 enters or exists a tunnel.

In Fig. 2 a schematic illustration of a rail-bound vehicle having a sensor system in accordance with another embodiment of the present invention is presented. The rail-bound vehicle of Fig. 2 differs from the one in Fig. 1 in that the control unit is arranged as a remote (central) control unit 30, instead of a local control unit (ref. 4 in Fig. 1). As previously mentioned, it may be advantageous to use a remote control unit 30 in order to retrieve sensor data from a plurality of rail-bound vehicles in order to even further increase the accuracy and reliability of the system. For example, the control unit 30 may be configured to allow a plurality of rail-bound vehicles 10 to travel along the same section of a rail-way track 20 and process the data from each rail-bound vehicle 10 before any final decision regarding the rail-way track condition is taken. Other features and specific details have already been discussed in the foregoing with reference to Fig. 1, and will for the sake of conciseness and brevity not be further discussed.

Moving on, the sensor system comprises a plurality of sensors 2, each sensor being arranged in a separate carriage 11 of the rail-bound vehicle. Each sensor 2 is furthermore arranged at a defined distance from a reference point within the rail-bound vehicle 10 and configured to generate a measurement signal (as indicated in the chart in Fig. 2) based on a detection of an environmental parameter. Furthermore, the sensors 2 are here in the form of accelerometers 2. The rail-bound vehicle 10 has passed over a locally damaged track 21, and the raw readings from the accelerometers as the rail-bound vehicle 10 passes over the locally damaged rack 21 is illustrated in the chart in Fig. 2.

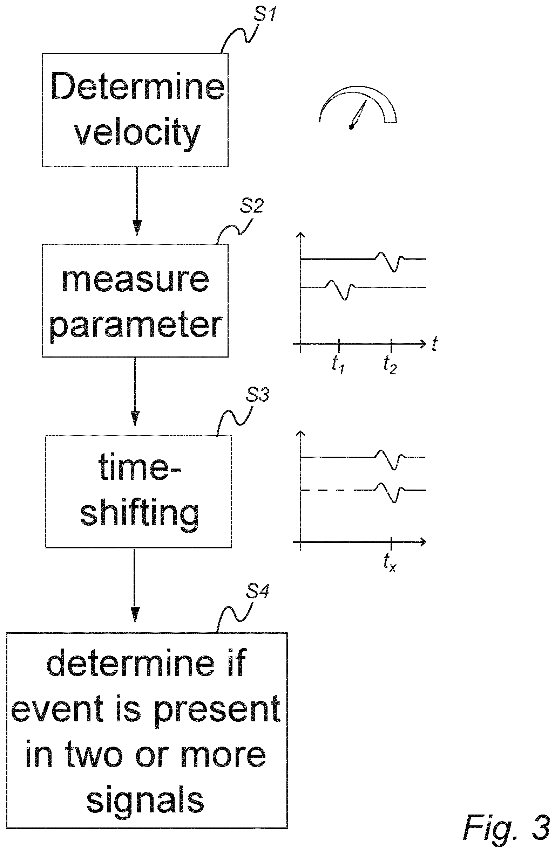

Accordingly, the control 30 is configured to receive these measurement signals, and time-shift the received signals based on the velocity of the rail-bound vehicle 10 and the defined distances in order to form a modified set of signals (see e.g. the chart next to box S3 in Fig. 3). Next, the control unit 30 is configured to determine whether an event 21, measured by the plurality of accelerometers 2 is presented at the same point in time in at least two signals of the modified set of signals, preferably in a majority of the signals in the modified set of signals, and most preferably in all signals of the modified set of signals.

Fig. 3 is a flow chart representation of a method for measuring environmental parameters associated with a rail-bound vehicle having a plurality of carriages, in accordance with an embodiment of the present invention.

The method comprises the steps of determining S1 a velocity of the rail-bound vehicle and measuring S2 an environmental parameter (e.g. vibration, sound, etc.) independently in each carriage of the plurality of carriages, thereby forming a plurality of measurement readings over time. Each measurement is performed at a defined distance from a reference point within the rail-bound vehicle. In other words, the distance between every measurement point is defined. In the example illustrated in Fig. 3, only two measurement readings are indicated, where an event was registered at time t₁ for the first sensor and at time t₂ for the second sensor.

Further, the method comprises a step of time-shifting the measurement readings based on the determined velocity and the defined distances. Hereby, a modified set of measurement readings is formed, such that a measurement made in each carriage at the same geographical location appears to have occurred simultaneously. In more detail, in the illustrated example, the signal of the first sensor is time shifted by the quotient of the distance between the two sensors over the velocity of the rail-bound vehicle.

The method further includes a step of determining S4 whether an event measured in each separate carriage is present at the same point in time in at least two readings of the modified set of measurement readings, preferably in a majority of the readings of the modified set of measurement readings, and most preferably in all of the readings of the modified set of readings. If this condition is true (an event is present at the same point in time for at least two of the readings), then it can be concluded that the measurements are correct and not a false positive.

The invention has now been described with reference to specific embodiments. However, several variations of the sensor system are feasible. For example, the system may comprise a specific type of sensor or a combination of different types of sensors are exemplified in the foregoing. Further, the time shifting may be based on a distance between the different sensors, or between each sensor and a reference point depending on application needs. Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements.

## Claims

1. A sensor system for a rail-bound vehicle having a plurality of carriages, said system comprising:
a plurality of sensors, each sensor being arranged in a separate carriage of said rail-bound vehicle at a defined distance from a reference point within said rail-bound vehicle, and each sensor being configured to generate a measurement signal based on detection of an environmental parameter;
a velocity measurement device configured to determine a velocity of said rail-bound vehicle;
a control unit configured to:
receive the measurement signal from each of said plurality of sensors;
time-shifting the received measurement signals based on said velocity of the rail-bound vehicle and said defined distance in order to form a modified set of signals, such that a measurement made by each sensor at the same geographical location appears to have occurred simultaneously; and
determine whether an event measured by said plurality of sensors is present at the same point in time in at least two signals of said modified set of signals, preferably in a majority of signals of said modified set of signals, and most preferably in all signals of said modified set of signals.

2. The sensor system according to claim 1, wherein said plurality of sensors comprises a plurality of accelerometers, each accelerometer being arranged in a separate carriage of the rail-bound vehicle at a defined distance from the reference point within said rail-bound vehicle, and each accelerometer being configured to generate a vibration detection signal based on a detection of vibration of an associated carriage;
wherein said control unit is configured to:
receive the vibration detection signal from each of said plurality of accelerometers;
time-shifting the received vibration detection signals based on said velocity of the rail-bound vehicle and said defined distance between the accelerometers and said reference point in order to form a modified set of vibration detection signals, such that a measurement made by each accelerometer at the same geographical location appears to have occurred simultaneously; and
determine whether an event measured by said plurality of accelerometers is present at the same point in time in at least two signals of said modified set of vibration detection signals, preferably in a majority of signals of said modified set of vibration detection signals, and most preferably in all signals of said modified set of vibration detection signals.

3. The sensor system according to claim 1 or 2, wherein said plurality of sensors further comprises a plurality of acoustic sensors, each acoustic sensor being arranged separate carriage of said rail-bound vehicle at a defined distance from the reference point within said rail-bound vehicle, and each acoustic sensor being configured to generate a sound detection signal based on sound measurements in an associated carriage;
wherein said control unit is further configured to:
receive the sound detection signal from each of said plurality of acoustic sensors;
time-shifting the received sound detection signals based on said velocity of the rail-bound vehicle and said defined distance between the acoustic sensors and said reference point in order to form a modified set of sound detection signals, such that a measurement made by each acoustic sensor at the same geographical location appears to have occurred simultaneously; and
determine whether an event measured by said plurality of acoustic sensors is present at the same point in time in at least two signals of said modified set of sound detection signals, preferably in a majority of signals of said modified set of sound detection signals, and most preferably in all signals of said modified set of sound detection signals.

4. The sensor system according to any one of claims 1 - 3, wherein said plurality of sensors further comprises a plurality of light sensors, each light sensor being arranged separate carriage of said rail-bound vehicle at a defined distance from the reference point within said rail-bound vehicle, and each light sensor being configured to generate a light detection signal based on light measurements in an associated carriage;
wherein said control unit is further configured to:
receive the light detection signal from each of said plurality of light sensors;
time-shifting the received light detection signals based on said velocity of the rail-bound vehicle and said defined distance between the light sensors and said reference point in order to form a modified set of light detection signals, such that a measurement made by each light sensor at the same geographical location appears to have occurred simultaneously; and
determine whether an event measured by said plurality of light sensors is present at the same point in time in at least two signals of said modified set of light detection signals, preferably in a majority of signals of said modified set of light detection signals, and most preferably in all signals of said modified set of light detection signals.

5. The sensor system according to any one of claims 1 - 4, wherein said plurality of sensors further comprises a plurality of air pressure sensors, each air pressure sensor being arranged separate carriage of said rail-bound vehicle at a defined distance from the reference point within said rail-bound vehicle, and each air pressure sensor being configured to generate an air pressure detection signal based on air pressure measurements in an associated carriage;
wherein said control unit is further configured to:
receive the air pressure detection signal from each of said plurality of air pressure sensors;
time-shifting the received air pressure detection signals based on said velocity of the rail-bound vehicle and said defined distance between the air pressure sensors and said reference point in order to form a modified set of air pressure detection signals, such that a measurement made by each air pressure sensor at the same geographical location appears to have occurred simultaneously; and
determine whether an event measured by said plurality of air pressure sensors is present at the same point in time in at least two signals of said modified set of air pressure detection signals, preferably in a majority of signals of said modified set of air pressure detection signals, and most preferably in all signals of said modified set of air pressure detection signals.

6. The sensor system according to any one of the preceding claims, further comprising:
a geolocation system arranged in said rail-bound vehicle for determining a geographical position of said rail-bound vehicle; and
wherein said control unit is configured to receive said geographical position from said geolocation system and determine a geographical location of said determined event based on said received geographical position.

7. The sensor system according to claim 6 when dependent on claim 4 or 5, wherein said control unit is further configured to correlate said modified set of light detection signals and/or said modified set of air pressure detection signals with said determined geographical position in order to add redundancy to measurements performed by said geolocation system.

8. The sensor system according to claim 4 or 5, further comprising:
a lighting device arranged in each carriage which comprises a light sensor and/or an air pressure sensor, each lighting device being operatively connected to said control unit; and
wherein said control unit is further configured to:
control each lighting device based on said modified set of light detection signals and/or said modified set of air pressure detection signals.

9. A method for measuring environmental parameters associated with a rail-bound vehicle having a plurality of carriages, said method comprising:
determining a velocity of said rail-bound vehicle;
measuring an environmental parameter independently in each carriage of the plurality of carriages thereby forming a plurality of measurement readings over time, each measurement being performed at a defined distance from a reference point within said rail-bound vehicle;
time-shifting the measurement readings based on said velocity of the rail-bound vehicle and said defined distance, in order to form a modified set of measurement readings, such that a measurement made in each carriage at the same geographical location appears to have occurred simultaneously; and
determining whether an event measured in each separate carriage is present at the same point in time in at least two readings of said modified set of measurement readings, preferably in a majority of readings of said modified set of measurement readings, and most preferably in all readings of said modified set of measurement readings.

10. The method according to claim 9, wherein said environmental parameter is vibration, sound, light or air pressure.

11. The method according to claim 9 or 10, further comprising:
determining a geographical position of the rail-bound vehicle.

12. The method according to claim 9, wherein said environmental parameter is light or air pressure, and wherein said method further comprises:
determining a geographical position of the rail-bound vehicle;
correlating the determined geographical position of the rail-bound vehicle with the modified set of light measurement readings and/or the modified set of air pressure readings.
